# EUROPEAN PATENT SPECIFICATION

(11) **EP 0 682 903 B1**
(45) Date of publication and mention of the grant of the patent: **15.10.1997**
(21) Application number: 95107147.1
(22) Date of filing: 11.05.1995
(51) Int. Cl.: A47J 37/12

(54) **Frying device**
Fritiergerät
Friteuse

(30) Priority: 17.05.1994 JP 126899/94; 20.05.1994 JP 131033/94; 09.12.1994 JP 331557/94
(43) Date of publication of application: 22.11.1995
(73) Proprietor: SATO, Tadayoshi, Arakawaku, Tokyo 116 (JP)
(72) Inventor: SATO, Tadayoshi, Arakawaku, Tokyo 116 (JP)
(74) Representative: Klingseisen, Franz, Dipl.-Ing.

(56) References cited:
- EP-A- 0 147 786
- BE-A- 727 214
- CH-A- 558 163
- FR-A- 1 414 201
- FR-A- 1 561 396
- GB-A- 826 075
- NL-A- 8 001 007
- US-A- 4 580 549

## Description

The invention relates to a frying device according to the preamble of claim 1.

Such a frying device is known from EP-A-147 786, which discloses air cooling pipes which are disposed below the heating means. Further, recessed portions are provided on the sides of the frying vessel in the area of the boundary between oil bath and water bath. For discharging oil a cock is provided in the lower part of the oil bath, and also a discharge cock is provided in the lower part of the water bath.

Further, a frying device is known from US-A-4 580 549, wherein air intake pipes are provided near the boundary between oil and water.

A problem arises in discharging the oil bath, which is usually heated up to about 200°C during the frying operation, so it takes some time to cool down the oil in order to clean the frying device at the end of the frying operation. It is dangerous and troublesome to remove the heated oil from the frying vessel, and to store it in a separate container, so that the inside of the frying device can be cleaned, whereupon the oil has to be filled back into the frying vessel, if the same frying oil is to be used repeatedly.

It is the object of the present invention to provide a frying device according to the preamble of claim 1, the handling of which frying device is improved with regard to the discharging of oil.

This object is achieved according to the present invention by the features in the characterising part of claim 1. An oil tank is provided in the water bath for receiving temporarily the oil heated up to a high temperature at the end of the frying operation. The oil tank is provided with an opening on its top side and a discharge cock on its lower side. The oil tank can have any shape, and the opening on the top side of the oil tank can also be provided with a means for opening and closing.

When water is filled into the frying vessel and the oil tank, whereas the discharge cock is closed, the oil in the oil tank spontaneously rises up and out of the oil tank to form the oil bath on the water bath due to the difference in specific gravity between water and oil, whereupon the frying operation can be started.

The oil tank is filled with water when the oil bath and the water bath are formed to be ready for the frying operation. The water in the tank can be kept during the frying operation or can be drained off during the frying operation by opening the discharge cock such as a spigot.

While the water is discharged from the tank by opening the discharge cock on the lower side of the oil tank at the end of the frying operation, the oil heated up to a high temperature during the frying operation is filled into the oil tank via the opening on its top side. When the oil is filled into the oil tank the discharge cock is closed so that the cleaning work can be started immediately which means that it is not necessary to wait a certain period of time for the cooling down of the heated oil or to transfer it to a seperate container.

The invention is explained more in detail by way of examples in connection with the drawings.
Fig. 1 is a cross-sectional view illustrating the first embodiment of the invention.
Fig. 2 is a cross-sectional view illustrating a second embodiment, and
Fig. 3 to 5 illustrate various shapes of tanks.

The figures show a frying vessel with oil bath 1, water bath 2, heating means 3, air cooling pipes 4 and a discharge cock 11. 12 is a grate, and the reference numeral 10 designates bits of fried batter collected on the bottom of the water bath.

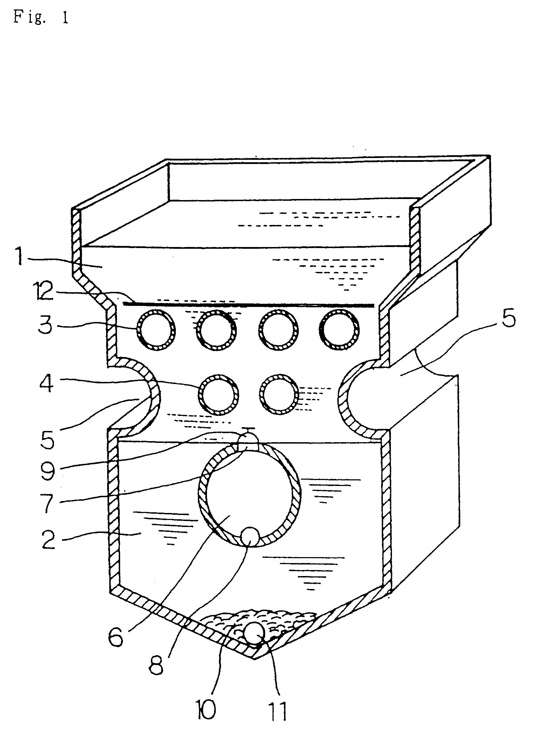

According to the embodiment of Figure 1, recessed portions 5 are formed on each side surface, which recessed portions 5 are provided just above the water bath 2.

Fig. 1 shows an embodiment according to the present invention comprising an oil tank 6 disposed in the water bath 2. The oil tank 6 is provided on the top side with an opening 7 and a spigot 9 or another means for opening and closing the opening 7. At the bottom of the oil tank 6 a discharge cock 8 is provided. The opening 7 of the oil tank 6 is positioned at the boundary between the water bath 2 and the oil bath 1. The opening 7 has preferably a diameter of 3 - 5 cm. During the frying operation the oil tank 6 can be filled with water whereas the spigot 9 and the discharged cock 8 are closed. The oil tank 6 can also be empty during the frying operation while the spigot 9 is closed and the discharge cock 8 is open.

When the frying operation is finished the discharge cock 8 is opened for discharging the water from the tank 6. As soon as the tank 6 is empty the discharge cock 8 is closed and the spigot 9 is opened so that oil of the oil bath can flow into the tank 6.

When the tank 6 is completely filled with the oil of the oil bath 1 the spigot 9 is closed.

According to another procedure the spigot 9 and the discharge cock 8 are opened whereupon the oil of the oil bath flows into the tank 6 whereas water is discharged from the tank 6 simultaneously.

Then at least the discharge cock 8 is closed at the moment when the water is drained off from the tank 6 and the tank is filled with oil.

When the oil of the oil bath 1 is completely stored in the tank 6 within the water bath 2, the water drain stopper 11 is openend to discharge water so that the frying vessel is empty and ready for cleaning work under safe conditions.

If the spigot 9 is closed and the discharge cock 8 is open during frying operation the empty tank 6 is connected to the atmosphere so that the tank 6 has the function of an air cooling space. The air from the outside ventilates the oil tank 6 and prevents the increase of the temperature of the water bath 2 during the frying operation.

It is not essential to provide a means for opening and closing the opening 7 of the tank 6 such as the spigot 9. If the spigot 9 is omitted the tank 6 is filled with water during the frying operation whereas the discharge cock 8 is closed. At the end of the frying operation the discharge cock is opened to drain water from the tank 6 so that oil flows into the tank. As soon as the oil of the oil bath 1 is completely stored in the tank 6 the discharge cock 8 is closed. After finishing the cleaning of the frying vessel water is filled into the frying vessel whereas the discharge cock 11 is closed. Then the spigot 9 is opened in case the spigot is provided. The water flows also into the oil tank 6 so that the oil rises out from the tank 6 due to the difference in specific gravity whereupon the oil bath 1 is built up as shown in fig. 1.

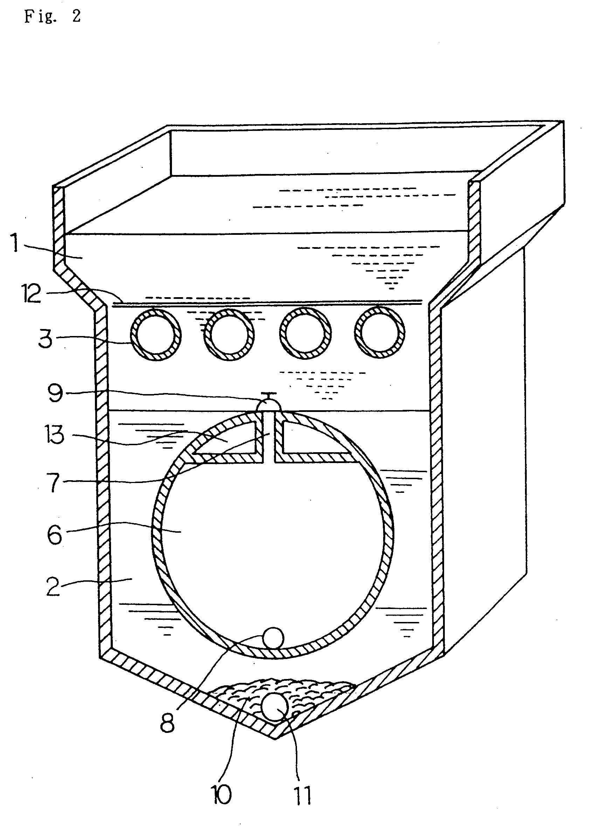

Fig. 2 shows another embodiment wherein an air cooling space is provided in the upper portion of the oil tank 6. In this way air cooling pipes 4 and recessed portions 5 can be omitted. In the embodiment of fig. 2 the opening 7 of the tank 6 is positioned also on the boundary between the oil bath and the water bath. The air cooling space 13 is connected to the outside of the frying vessel and divides the upper portion of the tank 6. The divided upper portion is provided with a connection to the outside or a tube connected to the outside is welded into the tank 6.

The air cooling space 13 is placed in the water bath 2 for cooling the water in the upper portion of the water bath 2 so that the oil bath 1 around the boundary is indirectly cooled by the cooled water around the air cooling space 13.

The boundary between oil bath and water bath can be positioned lower than the air cooling space 13 by reducing the amount of water in the water bath 2. In this way the oil in the oil bath 1 is directly cooled by the air in the cooling space 13. In such a case water should be filled into the frying vessel to rise the level of the boundary before the oil of the oil bath 1 flows into the tank 6.

According to another embodiment the opening 7 of the tank 6 can be provided at a lower position than the air cooling space 13 so that the boundary is placed at the level of the opening 7 whereas the air cooling space 13 extends into the oil bath 1.

In case the boundary is sufficiently remote from the heating means 3 the water bath 2 will not be heated to a high temperature so that it is not necessary to cool the oil bath 1. Therefore, the cooling pipes 4, the recessed portions 5 and an air cooling space 13 can be omitted in such a case, especially in connection with an air cooling function of the tank 6 as mentioned above.

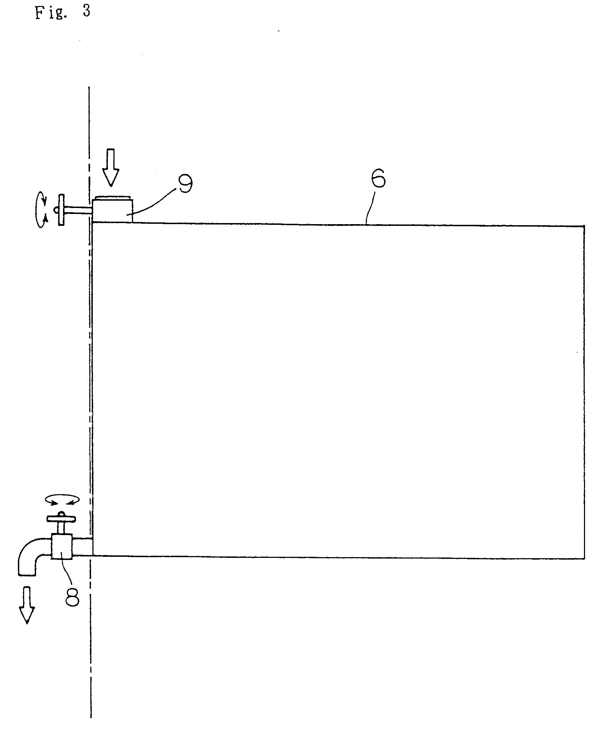

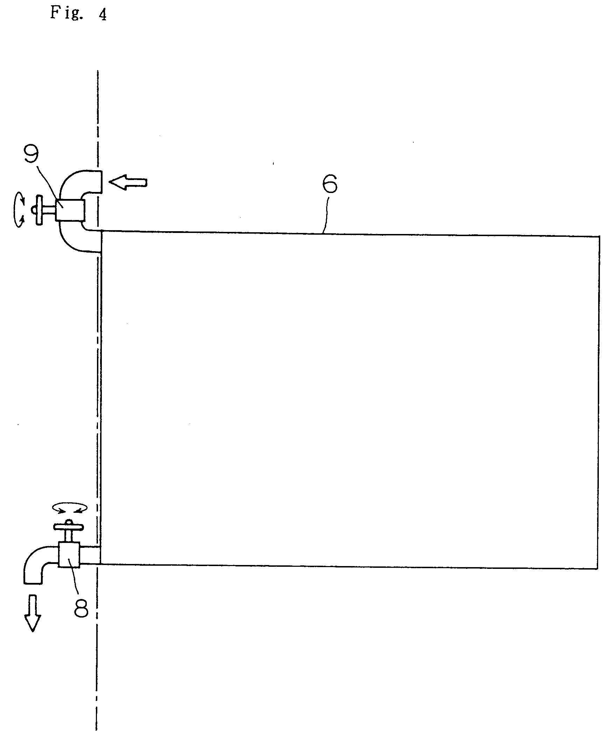

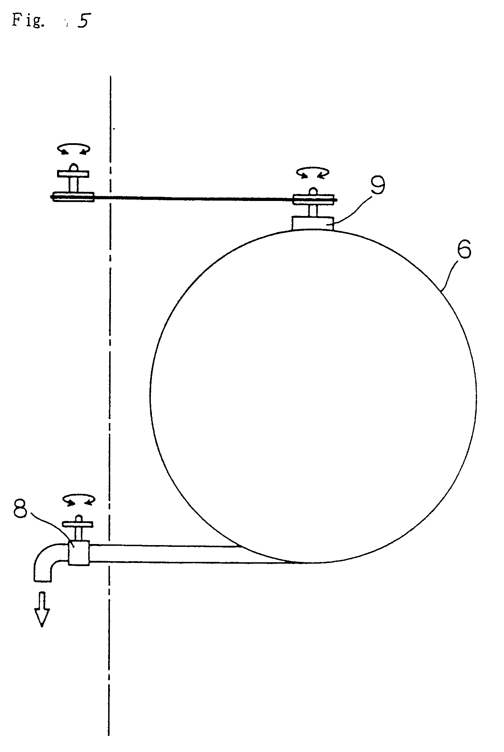

The tank 6 can have any shape. In case of a cylindrical shape as shown in fig. 3 and 4, the two ends of the tank can be easily welded to the front and the back walls of the frying vessel. In case of a sphere shape as shown in fig. 5 the heat transfer of the tank is improved. The arrows in fig. 3 to 5 show the flow of oil or water into and out of the tank as well as the actuation of the spigot 9 and the discharge cock 8.

If an oil tank 6 is provided within the water bath 2 it is not necessary to remove the oil from the frying vessel for cleaning purposes into a seperate container outside of the frying vessel, whereupon the oil in the tank can be used again for another frying operation. In this way the oil can be used repeatedly by easy handling of the frying device without removing the heated oil from the frying device. Additionally the oil tank can be used as a cooling space when the oil tank is empty and connected to the outside. In order to reduce the costs of manufacturing the cooling space can be combined with the tank 6 into one body.

## Claims

1. Frying device comprising a frying vessel for receiving an oil bath (1) in its upper portion and a water bath (2) in its lower portion, and a heating means (3) in the upper portion,
**characterized in that**
a tank (6) is provided in the lower portion, which tank (6) is provided with a discharge cock (8) at its bottom and an opening (7) at its top side for receiving oil from the oil bath (1).

2. Frying device according to claim 1, wherein the opening (7) of the tank (6) is positioned at the boundary between the water bath (2) and the oil bath (1).

3. Frying device according to claims 1 and 2, wherein means (9) are provided to open and close the opening (7) of the tank (6).

4. Frying device according to claims 1 to 3, wherein a water discharge cock (11) is provided at the bottom of the frying vessel.

5. Frying device according to claims 1 to 4, wherein an air cooling space (13) is provided in the upper portion of the tank (6).

6. Frying device according to claim 1, wherein at least one air cooling pipe (4) is disposed below the heating means (3).

7. Frying device according to claim 6, wherein a recessed portion (5) on the sides of the frying vessel extends in parallel to the air cooling pipe (4).

## Patentansprüche

1. Fritiergerät umfassend
einen Fritierbehälter, der ein Ölbad (1) in seinem oberen Teil und ein Wasserbad (2) in seinem unteren Teil aufnimmt,
und ein Heizmittel (3) im oberen Teil,
**dadurch gekennzeichnet,**
daß ein Tank (6) im unteren Teil angebracht ist, der mit einem Ablaufhahn (8) an seinem Boden und einer Öffnung (7) an seiner Oberseite zum Aufnehmen von Öl aus dem Ölbad (1) versehen ist.

2. Fritiergerät nach Anspruch 1,
in dem die Öffnung (7) des Tanks (6) an der Grenze zwischen dem Wasserbad (2) und dem Ölbad (1) angeordnet ist.

3. Fritiergerät nach den Ansprüchen 1 und 2,
in dem Mittel (9) zum Öffnen und Schließen der Öffnung (7) des Tanks (6) angebracht sind.

4. Fritiergerät nach den Ansprüchen 1 bis 3,
in dem ein Wasserablaufhahn (11) am Boden des Fritierbehälters angebracht ist.

5. Fritiergerät nach den Ansprüchen 1 bis 4,
in dem ein Luftkühlraum (13) im oberen Teil des Tanks (6) angebracht ist.

6. Fritiergerät nach Anspruch 1,
in dem zumindest eine Luftkühlleitung (4) unterhalb des Heizmittels (3) angeordnet ist.

7. Fritiergerät nach Anspruch 6,
in dem eine Ausnehmung (5) an den Seiten des Fritierbehälters parallel zur Luftkühlleitung (4) verläuft.

## Revendications

1. Friteuse comprenant un bac de friture destiné à recevoir un bain d'huile (1) dans sa partie supérieure et un bain d'eau (2) dans sa partie inférieure, et un dispositif de chauffage (3) dans la partie supérieure, caractérisée en ce qu'il est prévu un bac (6) dans la partie inférieure, lequel bac (6) est muni d'un robinet de vidange (8) sur sa partie inférieure et d'une ouverture (7) sur sa partie supérieure pour recevoir l'huile provenant du bain d'huile (1).

2. Friteuse selon la revendication 1, dans laquelle l'ouverture (7) du bac (6) est située sur la limite entre le bain d'eau (2) et le bain d'huile (1).

3. Friteuse selon les revendications 1 et 2, dans laquelle sont prévus des moyens (9) pour ouvrir et fermer l'ouverture (7) du bac (6).

4. Friteuse selon les revendications 1 à 3, dans laquelle un robinet de vidange d'eau (11) est prévu sur la partie inférieure du récipient de friture.

5. Friteuse selon les revendications 1 à 4, dans laquelle est prévu un espace de refroidissement par air (13) dans la partie supérieure du bac (6).

6. Friteuse selon la revendication 1, dans laquelle au moins une conduite de refroidissement par air (4) est disposée au-dessous du dispositif de chauffage (3).

7. Friteuse selon la revendication 6, dans laquelle une partie évidée (5) sur les côtés du récipient de friture s'étend parallèlement à la conduite de refroidissement par air (4).
